# EUROPEAN PATENT SPECIFICATION

(11) **EP 3 508 321 B1**
(45) Date of publication and mention of the grant of the patent: **24.03.2021**
(21) Application number: 17846482.2
(22) Date of filing: 29.08.2017
(51) Int. Cl.: B29C 48/02, B29L 9/00, B29L 23/00, B29C 48/151, B29C 48/156, B29C 48/285, B29C 48/34, E04F 15/06, B29L 31/00, E04F 13/12

(54) **EXTRUSION MOLDED ARTICLE**
EXTRUSIONSFORMARTIKEL
ARTICLE MOULÉ PAR EXTRUSION

(30) Priority: 01.09.2016 JP 2016170428; 28.12.2016 JP 2016255603
(43) Date of publication of application: 10.07.2019
(73) Proprietor: Sekisui Jushi Kabushiki Kaisha, Osaka-shi, Osaka 530-8565 (JP)
(72) Inventor: AKAKI, Tatsuya, Gamou-gun Shiga 520-2573 (JP)
(74) Representative: Kuhnen & Wacker Patent- und Rechtsanwaltsbüro PartG mbB
(86) International application number: PCT/JP2017/030900
(87) International publication number: WO 2018/043477

(56) References cited:
- WO-A1-2016/105209
- JP-A- S 597 028
- JP-A- S 597 028
- JP-A- H0 396 786
- JP-A- H06 254 938
- JP-A- H06 281 056
- JP-A- H08 156 135
- JP-A- H08 156 135
- JP-A- S59 204 525
- JP-A- S61 284 425
- JP-B2- 4 072 671
- JP-U- S49 100 214

## Description

### Technical Field

The present invention relates to an extrusion molded article including a coating part that covers an external surface of a core material.

### Background Art

Conventionally, natural wood has been used as a flooring material for benches, tables, zig-zag bridges and boardwalks installed in promenades, park facilities, rest spaces and the like, and also for seats in a stadium and decks of balconies or terraces of residences. However, taking into account long-term durability and surface discoloration, nowadays a molded article is used, which is made of a shaped metal material whose external surface is coated with a resin.

For example, JP 2008-080753 A discloses an integral extrusion molded article made by forming two or more coating layers respectively made of synthetic resins on an external surface of an aluminum core material. Out of the above coating layers, the synthetic resin layer making contact with the core material is a polyester-based resin layer. The core material is subjected to alumite treatment in at least a region for forming the coating layer, which is not involved in sealing treatment.

Also, the Applicant of the present invention proposes a resin-coated long body, as disclosed in JP 2013-227777 A, including: a cylinder body that has an inward recessed surface formed on an external surface along a longitudinal direction; and a coating resin layer that coats the external surface including the recessed surface of a core material. In the recessed surface of the core material, a dovetail groove-like retention groove is formed in the inward direction of the core material, so that the coating resin layer partly enters the retention groove.

From JP S59-7028 A, a method for producing a synthetic resin rod reinforced with a metal pipe is known. There, a stopper body made of synthetic resin and having an outer diameter suitable to be inserted into a metal tube is equipped with stopper fixing devices having hooks for coupling with the metal tube. The stopper body is inserted between ends of two adjoining metal tubes and the outer circumference of the metal tubes and the stopper body are continuously extrusion covered with synthetic resin to form a synthetic resin covered layer. After that, a synthetic resin rod-like product is obtained by cutting off the stopper body at its middle point. A plastic imitation wood is furthermore known from JP H08-156135 A. There a cap having a pattern of annual rings is attached to each or one of the ends of a tubular body. The outer peripheral surfaces of the tubular body and the annular ring cap are covered with a resin coat that has a bark-like irregular pattern thereon. A cap plug is pressed in a breathing hole of the annular ring cap.

### Summary of the Invention

### Problem to Be Solved by the Invention

When coating such a core material with a resin, generally the extrusion molding method is used. Since the core material has a predetermined length, the core materials are sequentially supplied to the extruder at a certain interval so as to cut, after coating, the coated core materials at positions of the respective intervals. In the result, a cut surface remains exposed, which may lead to exfoliation of the coating part from the core material or to exposure of the core material due to repeated changes in the temperature in the installation environment. Thus, an extrusion molded article is desired, in which the end parts are easily processed to be tightly closed up.

The present invention was made in consideration of the above circumstances, an object of which is to provide an extrusion molded article made by coating a core material with a resin, in which longitudinal direction end parts are easily processed to be tightly closed up.

### Means for Solving the Problem

In order to achieve the above object, the present invention has a configuration as follows. That is, an extrusion molded article of the present invention as set forth in claim 1 includes: a core material; and a coating part that is made of a synthetic resin so as to coat an external surface of the core material. The core material includes: a tube body; and a lid part made of a synthetic resin so as to close up a longitudinal direction end part of the tube body. The lid part includes a groove part formed in an external surface of the lid part intersecting with a longitudinal direction of the tube body. The groove part includes a communication part configured such that a longitudinal direction end part of the groove part communicates with an internal space of the tube body. The coating part includes a filling part configured to fill an inside of the groove part.

In the preset invention, the coating part may include a swelling part that expands into the internal space of the tube body through the communication part of the groove part.

Also in the preset invention, the lid part may be disposed in a direction intersecting with the longitudinal direction of the tube body.

Also in the present invention, the lid part may include a through hole that penetrates the lid part from one end part on the side of the tube body toward the other end part.

Furthermore, in the present invention, the core material may include, on a part of the external surface thereof, an exposed part that is not coated with the coating part, and the lid part may include a cut-out part that is formed in a direction separating from the longitudinal direction end part of the tube body and that connects the internal space to the exposed part.

### Effects of the Invention

In the preset invention, the lid part includes a groove part formed in an external surface thereof and intersecting with the longitudinal direction of the tube body. The groove part includes a communication part configured such that a longitudinal direction end part of the groove part communicates with an internal space of the tube body. The coating part includes a filling part configured to fill an inside of the groove part. With the above-described configuration, it is possible to close up the end part of the extrusion molded article and also to prevent exfoliation of the coating part from the core material thanks to an "anchored effect" of the filling part that prevents expansion/contraction of the coating part in the longitudinal direction due to changes in the ambient temperature. Also, since the air inside the groove part can move through the communication part to the internal space of the tube body, it is possible to reduce defects such as generation of bubbles in the coating part due to the air that remains in the groove part at the time of extrusion molding, which results in reduction of delamination associated with the generation of bubbles.

In the present invention, it is preferable that the coating part includes the swelling part that expands into the internal space of the tube body through the communication part of the groove part, because with this configuration, the end part of the tube body on the side of the lid part is fixed by the filling part and the swelling part of the coating part. Thus, it is possible to further effectively prevent the relative contraction of the coating part, which results in reduction of the exfoliation of the coating part from the core material.

Also in the present invention, it is preferable that the lid part is disposed in the direction intersecting with the longitudinal direction of the tube body, because with this configuration, the filling part can further effectively exert the "anchored effect" when the coating part relatively expands and contracts in the longitudinal direction due to changes in the ambient temperature.

Also in the present invention, it is preferable that the lid part includes the through hole that penetrates the lid part from one end part on the side of the tube body toward the other end part, because with this configuration, for example, air moves outside through the through hole even when the internal space of the tube body is heated and the internal pressure increases at the time of extrusion molding. Thus, the air is discharged outside from a clearance of a joining part of the tube body and the lid part, which results in prevention of defective molding such as rupture or expansion of the coating part.

Furthermore, in the present invention, it is preferable that the core material includes, on a part of the external surface thereof, an exposed part that is not coated with the coating part. Also it is preferable that the lid part includes a cut-out part that is formed in the direction separating from the longitudinal direction end part of the tube body and that connects the internal space to the exposed part. Because with this configuration, for example, air in the internal space flows outside from the recess part through the exposed part even when the internal space of the tube body is heated and the internal pressure increases at the time of extrusion molding. Thus, the air is discharged outside from the clearance of the joining part of the tube body and the lid part, which results in prevention of defective molding such as rupture or expansion of the coating part.

### Brief Description of the Drawings

[FIG. 1]

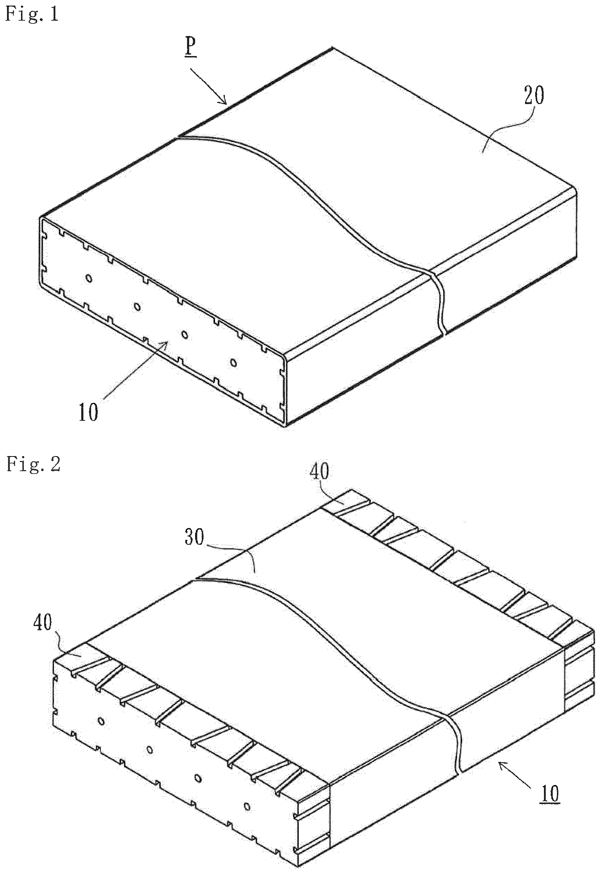

   FIG. 1 is a perspective view illustrating an embodiment of an extrusion molded article of the present invention.
[FIG. 2]
   FIG. 2 is an explanatory view indicating a core material of FIG. 1.
[FIG. 3]

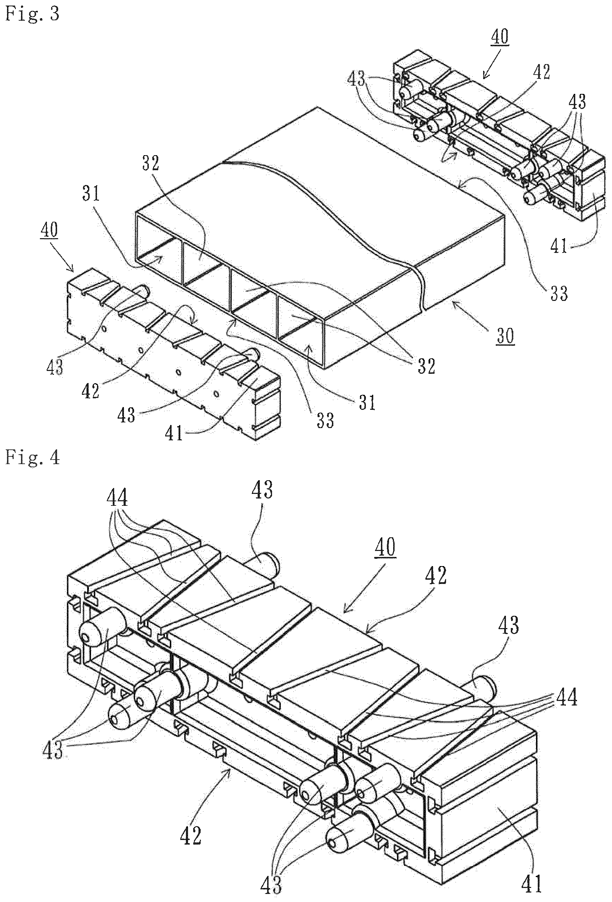

   FIG. 3 is an exploded view indicating the core material of FIG. 2.
[FIG. 4]
   FIG. 4 is a perspective view illustrating an embodiment of a lid part of the extrusion molded article of the present invention.
[FIG. 5]

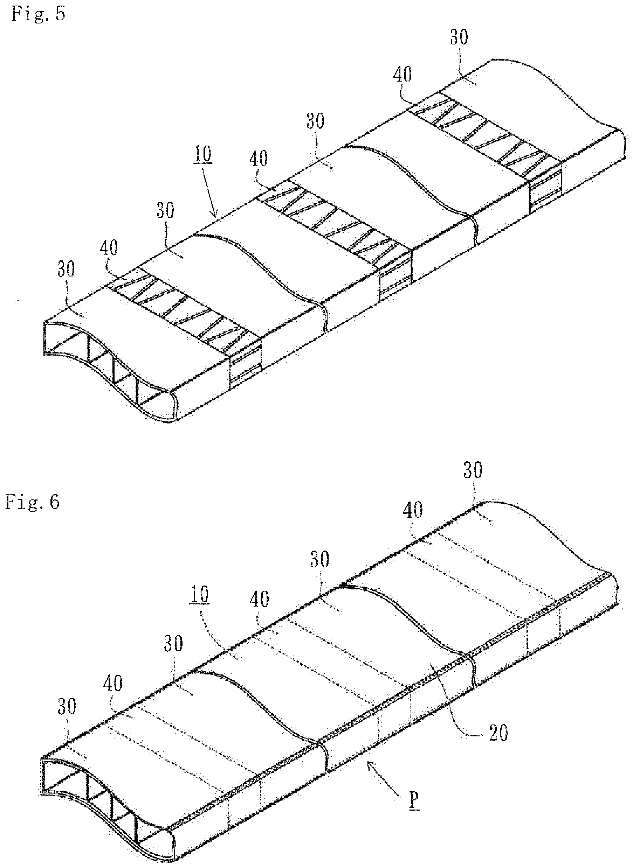

   FIG. 5 is a perspective view illustrating an embodiment of the core material of the extrusion molded article of the present invention.
[FIG. 6]
   FIG. 6 is a perspective view illustrating another embodiment of the extrusion molded article of the present invention.
[FIG. 7]

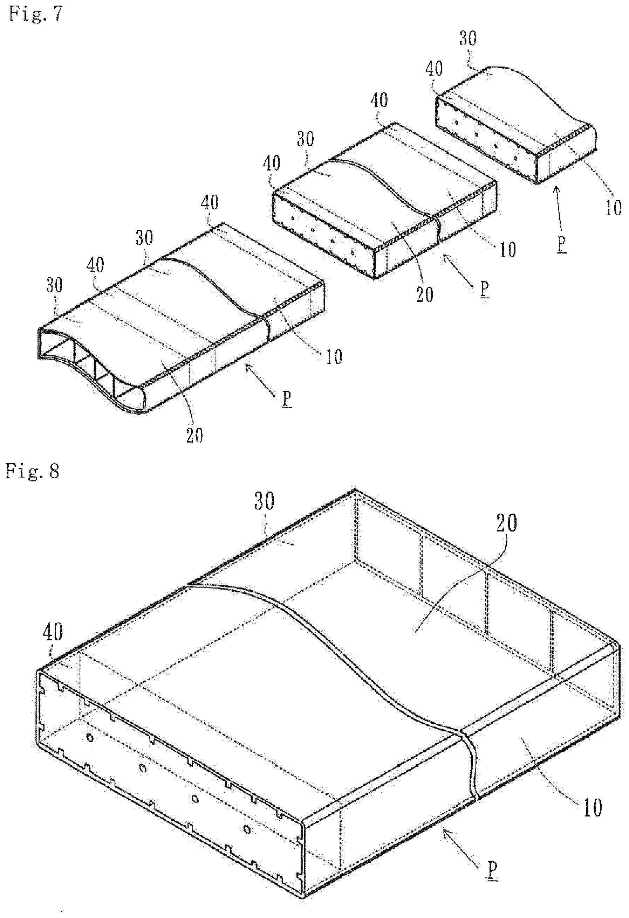

   FIG. 7 is an explanatory view of FIG. 6.
[FIG. 8]
   FIG. 8 is a perspective view illustrating another embodiment of the extrusion molded article of the present invention.
[FIG. 9]

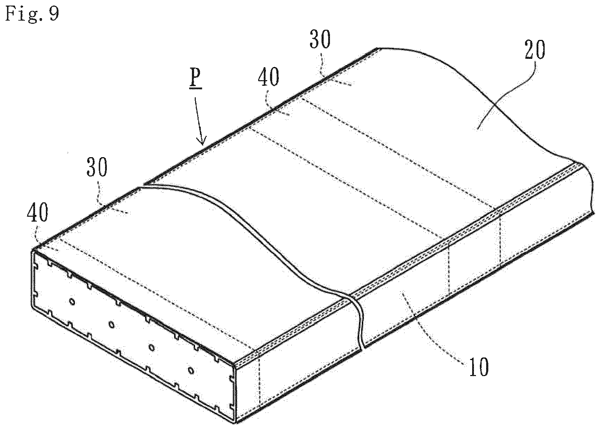

   FIG. 9 is a perspective view illustrating another embodiment of the extrusion molded article of the present invention.
[FIG. 10]

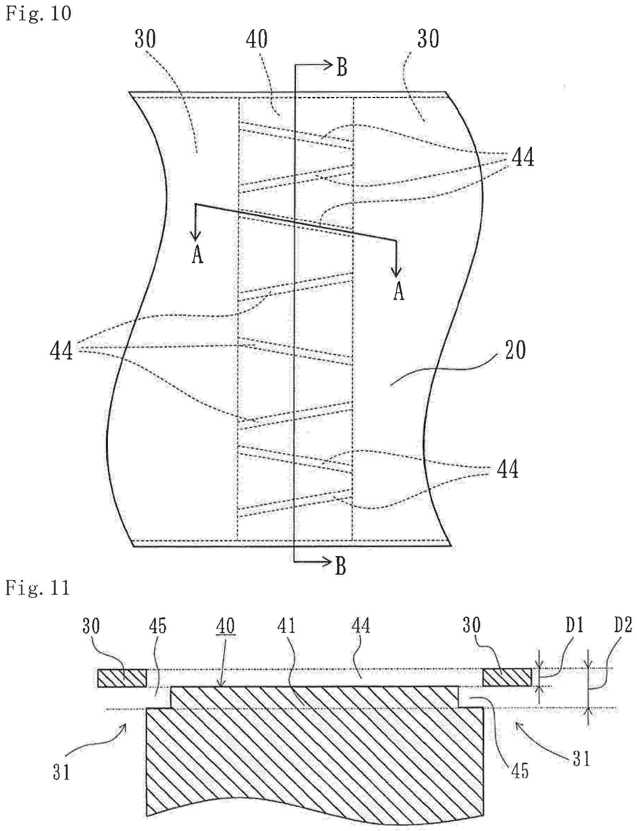

   FIG. 10 is an enlarged plan view illustrating the vicinity of the lid part of FIG. 6.
[FIG. 11]
   FIG. 11 is an enlarged end view illustrating a main part taken from line A-A of FIG. 10.
[FIGS.12]

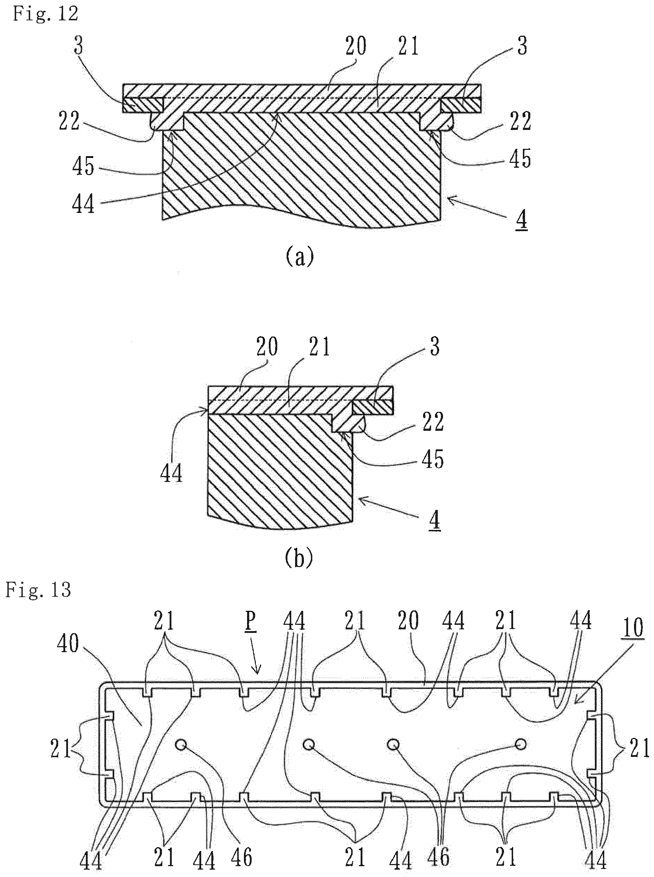

   FIGS. 12 are enlarged end views taken from line A-A of FIG. 10.
[FIG. 13]
   FIG. 13 is an enlarged cross-sectional view taken from line B-B of FIG. 10.
[FIG. 14]

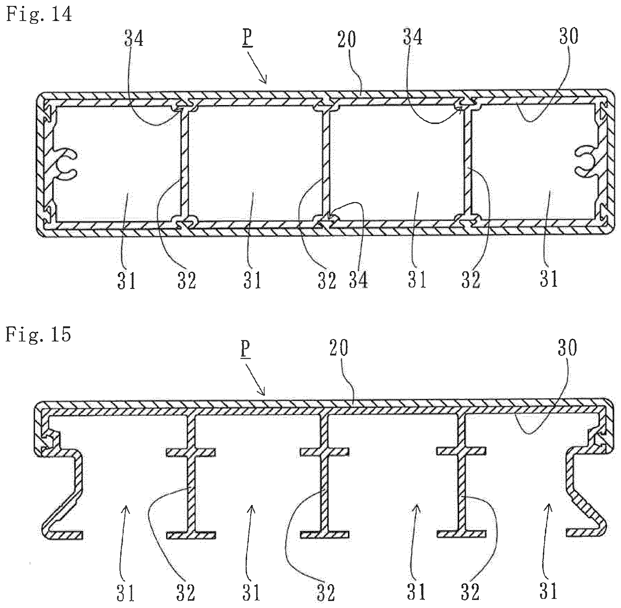

   FIG. 14 is a cross-sectional view illustrating another embodiment of the extrusion molded article of the present invention.
[FIG. 15]
   FIG. 15 is a cross-sectional view illustrating another embodiment of the extrusion molded article of the present invention.
[FIG. 16]

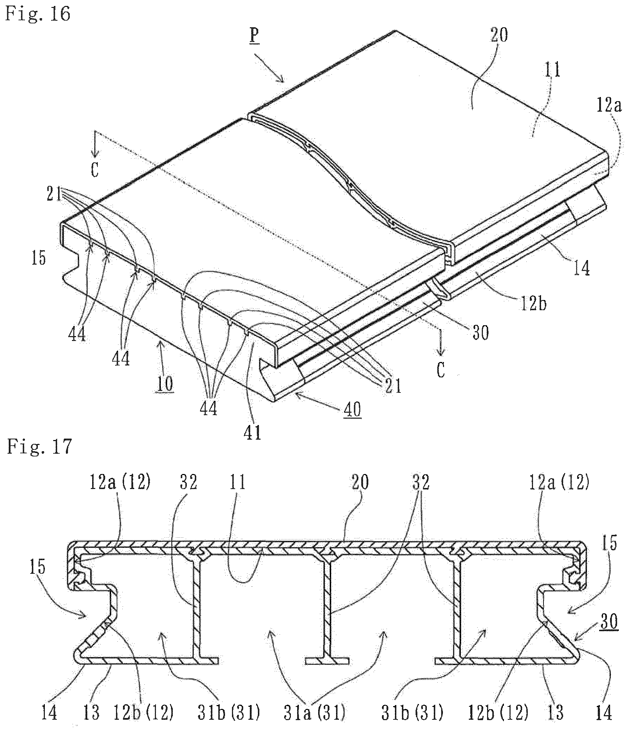

   FIG. 16 is a perspective view illustrating another embodiment of the extrusion molded article of the present invention.
[FIG. 17]
   FIG. 17 is an enlarged cross-sectional view taken from line C-C of FIG. 16.
[FIG. 18]

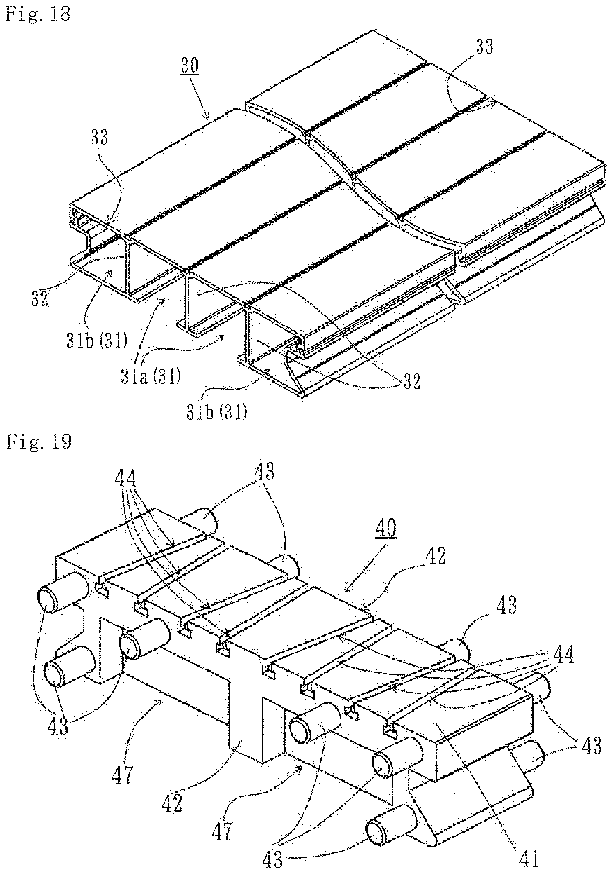

   FIG. 18 is a perspective view illustrating the embodiment of a tube body of the extrusion molded article of FIG. 16.
[FIG. 19]
   FIG. 19 is a perspective view illustrating the embodiment of the lid part of the extrusion molded article of FIG. 16.
[FIG. 20]

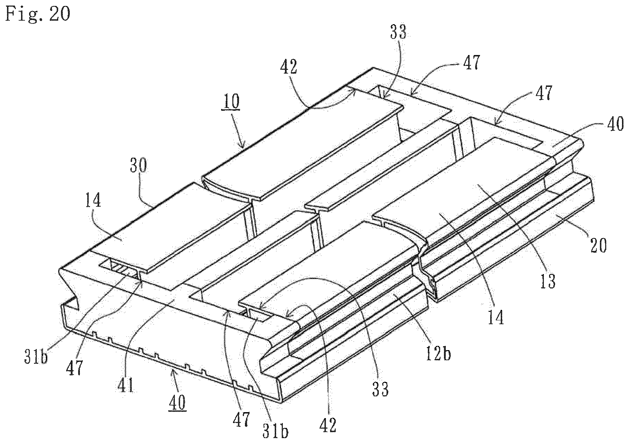

   FIG. 20 is a perspective view viewed from the back side of FIG. 16.

### Means for Carrying Out the Invention

Hereinafter, a preferred embodiment will be described in detail with reference to the drawings. An extrusion molded article P is made long, and has a laterally long rectangular cross section. The extrusion molded article P includes: a core material 10; and a coating part 20 that is made of a synthetic resin and that coats an external surface of the core material 10.

FIG. 1 is a perspective view illustrating an embodiment of the extrusion molded article P of the present invention. FIGS. 2 and 3 are explanatory views of FIG. 1. FIG. 2 is the explanatory view indicating the core material 10 of FIG. 1. FIG. 3 is the exploded explanatory view of FIG. 2. The core material 10 includes: a square tube body 30 made of a metal so as to have a long shape with its inside being hollow; and a lid part 40 made of a synthetic resin so as to be attached to a longitudinal direction end part of the square tube body 30. As shown in FIG. 3, the square tube body 30 in this embodiment has a thin-walled hollow shape, and has a laterally long rectangular cross section. A hollow internal space 31 thereof is divided into multiple spaces by vertical walls 32. As the material of the square tube body 30, a metal is preferable. In particular, a shaped material made of aluminum alloy, which is light in weight, is suitably used. The material of the square tube body 30 may also be a synthetic resin.

As shown in FIG. 3, the lid part 40 includes: a base part 41 that closes up an end part of the square tube body 30; and a protruding part 43 disposed on an end part 42 that is a surface of the base part 41 facing an end part 33 of the square tube body 30. The lid part 40 is connected to the square tube body 30 with the protruding part 43. In this embodiment, the protruding part 43 is inserted into the internal space 31 and furthermore makes contact with an internal wall surface of the internal space 31. More specifically, the protruding part 43 is constituted of a set of three bars that extend in the longitudinal direction of the internal space 31 into which the three bars are inserted. The three bars respectively make contact with upper and lower wall surfaces as the internal wall surfaces of the internal space 31 and both side wall surfaces of the vertical wall 32.

With the above-described configuration, the end part 33 of the square tube body 30 is closed up by the lid part 40. The protruding part 43 is not limited to that in this embodiment provided that it can close up the end part 33 of the square tube body 30. However, it is preferable that the protruding part 43 makes contact with the internal wall surfaces of the internal space 31 of the square tube body 30 in such a manner, for example, that it makes contact with at least one part of each of upper, lower, left and right wall surfaces including the upper and lower wall surfaces and the left and right side wall surfaces of the vertical wall. Also it is preferable that a plurality of protruding parts 43 is provided on the one end part 42 as shown in this embodiment because such a configuration prevents positional displacement of the lid part 40 with respect to the square tube body 30.

FIG. 4 is a perspective view illustrating an embodiment of the lid part 40. FIG. 5 is a perspective view illustrating an embodiment of the core material 10. FIG. 6 is a perspective view illustrating another embodiment of the extrusion molded article P of the present invention. FIG. 7 is an explanatory view illustrating the extrusion molded article P of FIG. 6, which is cut at positions in the vicinity of the respective lid parts 40. FIG. 8 is a perspective view illustrating another embodiment of the extrusion molded article P of the present invention. FIG. 9 is a perspective view illustrating another embodiment of the extrusion molded article P of the present invention. Since the lid part 40 is simply required to close up the end part 33 of the square tube body 30, it is sufficient to be attached to only one square tube body 30 as shown in FIGS. 2 and 3. However, in this embodiment, the base part 41 includes the protruding parts 43 on both end parts 42, as shown in FIG. 4. In this way, it is possible to make a long core material 10 as shown in FIG. 5, by connecting the square tube bodies 30 to one another in the longitudinal direction via the lid parts 40. Such a configuration is also preferable because the coating part 20 can be easily formed by extrusion molding over the external surfaces of the plurality of square tube bodies 30 as shown in FIG. 6, and furthermore because continuous supply of the square tube bodies 30 becomes easy. In addition, the extrusion molded article P including the lid parts 40 on both end parts 33 of the square tube body 30 can be manufactured by dividing the connected square tube bodies 30 into a single body after extrusion molding, by cutting the connected square tube bodies 30 at the positions in the vicinity of the respective lid parts 40 as shown in FIG. 7. Therefore, it is effective in terms of manufacture.

Thus, the extrusion molded article P of the present invention includes the core material 10 that is made by: closing up both end parts 33 of the square tube body 30 by the respective lid parts 40 as shown in FIG. 1; and closing up at least one end part 33 of the square tube body 30 by the lid part 40 as shown in FIG. 8. Also, the extrusion molded article P includes the lid part 40 that is interposed between the square tube bodies 30 so as to connect the square tube bodies 30 such that the core material 10 is divided into two after extrusion molding by cutting the lid part 40 into two, as shown in FIG. 7. Furthermore, the extrusion molded article P includes the core material 10 made by connecting the plurality of square tube bodies 30 via the lid parts 40 such that at least one longitudinal direction end part 33 is closed up by the lid part 40 as shown in FIG. 9.

The coating part 20 coats the external surface of the core material 10. In this embodiment, the coating part 20 coats an upper surface 11, both side surfaces 12 and a lower surface 13 of the core material 10. It is sufficient that the coating part 20 is formed at least on a part that makes contact with a user who utilizes the extrusion molded article P. For example, when the extrusion molded article P is used as a flooring material or a deck material, the coating part 20 may include only an upper surface part that coats the upper surface 11 of the core material 10, or may coat a part or the entire parts of the upper surface 11 and the side surface 12 while not coating the lower surface 13, or further may coat the entire perimeter of the external surface of the core material 10.

FIGS. 10 to 12 are explanatory views of FIG. 1. FIG. 10 is an enlarged plan view illustrating the vicinity of the lid part 40 of FIG. 6. FIG. 11 is an end view taken from line A-A of FIG. 10 (from which the coating part is omitted). FIGS. 12 are explanatory views of FIG. 10. FIG. 12(a) is an enlarged cross-sectional view taken from line A-A of FIG. 10, and FIG. 12(b) is an enlarged cross-sectional view illustrating a part in the vicinity of one lid part 40 taken from line B-B of FIG. 10. In an upper surface part of the lid part 40, a groove part 44 is disposed in a direction intersecting with the longitudinal direction of the core material 10. Also as shown in FIGS. 12, the coating part 20 includes a filling part 21 with which the inside of the groove part 44 is filled.

With the above-described configuration, the respective square tube bodies 30, which are separated from each other as a result of cut of the lid part 40, include respectively the cut lid part 40. Thus, in this embodiment, the end part of the extrusion molded article P is easily closed up, and there is no need to attach the lid part 40 to the square tube body 30 after the separation. The lid part 40 is made of a synthetic resin, and the external surface of the lid part 40 is coated with the coating part 20 made of a synthetic resin. Thus, water intrusion from the boundary is not likely to occur.

Furthermore, generally speaking, there is a considerable difference between the square tube body 30 and the coating part 20 in the thermal expansion coefficient. Thus, the synthetic resin of the coating part 20 occasionally and relatively expands and contracts due to the change in the ambient temperature in the installation environment. For example, when the coating part 20 contracts, since the square tube body 30 contracts in the longitudinal direction to have a considerably large contraction size, the coating part 20 cannot contract associated with the square tube body 30 and thus may exfoliate. However, since the filling part 21 inside the groove part 44 of the lid part 40 exerts an "anchored effect", the contraction of the coating part 20 can be reduced, which leads to prevention of the exfoliation of the coating part 20 from the core material 10. Although the above-described lid part 40 is the lid part 40 shown in FIG. 12(a), it is also possible for the lid part 40 shown in FIG. 12(b), i.e. the lid part 40 after the division, to provide the same effect as mentioned above.

In this embodiment, at the end part of the groove part 44 on the side of the square tube body 30, a communication part 45 is disposed so as to have a depth D2 larger than a thickness D1 of the upper wall part of the square tube body 30. The communication part 45 communicates with the internal space 31 of the square tube body 30.

When the inside of the groove part 44 is filled with the resin of the coating part 20 at the time of extrusion molding, if air remains in the groove part 44, bubbles may be generated locally in the coating part 20 due to the remaining air, which may result in defective molding. However, with the above described configuration, the air inside the groove part 44 can move through the communication part 45 to the internal space 31. Thus, it is possible to reduce the remaining air in the groove part 44. Consequently, it is possible to continuously form the coating part 20, by extrusion molding, over the core material 10 made by connecting the multiple square tube bodies 30 via the lid parts 40 while reducing defects such as generation of bubbles in the vicinity of the lid parts 40. Furthermore, it is possible to easily close up the end part of the extrusion molded article P by cutting the coated core material 10 at the position in the vicinity of the lid part 40, which leads to efficient manufacture.

Taking into account the "anchored effect" by the resin that fills the inside of the groove part 44, it is preferable that the intersection angle of the longitudinal direction of the core material in the lid part 40 and the forming direction of the groove part 44 is made as large as possible. However, in this case, the length of the groove part 44 also becomes large, which means that the air is likely to remain inside the groove part 44. Therefore, the intersection angle is preferably 45 degrees or less, and more preferably, 30 degrees or less.

The coating part 20 has a swelling part 22 that expands into the internal space 31 of the square tube body 30 through the communication part 45 of the groove part 44. Thus, the end part of the square tube body 30 is covered by the coating part 20 from the external surface to the internal space 31, which further enhances the "anchored effect" of the filling part 21 and also reduces relative contraction of the coating part 20. As a result, the coating part 20 is further prevented from exfoliating from the core material 10.

In this embodiment, the lid part 40 includes multiple groove parts 44 that are arranged adjacent to one another in the width direction orthogonal to the longitudinal direction of the square tube body 30. Since one lid part 40 includes the multiple filling parts 21, it is possible to synergistically improve the "anchored effect" by the filling part 21.

FIG. 13 is an enlarged cross-sectional view taken from line B-B of FIG. 10. In this embodiment, the lid part 40 has the groove parts 44 also in the side surfaces and in the lower surface of the external surface. Thus, since the filling parts 21 are also formed respectively in the groove parts 44 in the side surfaces and in the lower surface of the external surface, the "anchored effect" can be further exhibited.

It is preferable that the materials for the coating part 20 and the lid part 40 are synthetic resins that are welded to each other, and is further preferable that the materials are selected in such a manner that the melted synthetic resin of the coating part 20 is welded to the lid part 40 at the time of extrusion molding. Thus, it is possible to improve the unity of the boundary of the external surface of the lid part 40 and the coating part 20, which can further prevent water intrusion from the boundary. As the specific combination of the synthetic resins, for example, a polyolefin resin may be used as the synthetic resin for the joining part while the same kind of polyolefin resin or a modified polyethylene obtained by modifying the polyethylene resin may be used as the synthetic resin for the coating part 20. Thus, it is possible that the coating part 20 has a high adhesiveness to the external surface of the square tube body 30 and furthermore a high weldability to the polyolefin.

In this embodiment, the polyethylene resin is used as the material for the lid part 40. However, the material for the lid part 40 is not limited thereto. For example, as the material for the lid part 40, it is possible to appropriately select and use one, or a mixture of two or more, of: a polyolefin-based resin such as polypropylene, polybutene, polybutene, polyisoprene or polymethylpentene; an ethylene-propylene copolymer; an ethylene-vinyl acetate copolymer; an ethylene-α-olefin copolymer; an ethylene-ethyl acrylate copolymer; an ethylene-acrylic acid copolymer; and a metal neutralized product of an ethylene-unsaturated carboxylic acid copolymer.

In this embodiment, the ethylene-acrylic acid copolymer is used as the material for the coating part 20, because it is preferable that the material has an adhesiveness to the square tube body 30 and furthermore a weldability to the lid part 40. However, the material for the coating part 20 is not limited to the above in this embodiment. It may be the same material as that of the lid part 40. It can be appropriately set according to the adhesiveness to the square tube body 30 or according to the material of the lid part 40.

The coating part 20 may contain an additive such as a filler. As the filler, at least one may be selected from the group consisting of: calcium carbonate; talc; mica; silica; aluminum hydroxide; magnesium hydroxide; glass or glass fiber; clay; wood flour; carbon fiber; montmorillonite; and fly ash. Also, the lid part 40 may contain an additive such as the filler, similarly to the above.

Especially, when the coating part 20 and the lid part 40 contain wood flour as the filler, the front surface as well as the end parts of the extrusion molded article P can give a wood feel, which is preferable because it contributes not only to a good texture but also to a high strength.

Furthermore, in case of necessity, the coating part 20 and the lid part 40 may contain, for example: a heat stabilizer; an acid neutralizer; an ultraviolet absorber; a light stabilizer; a colorant such as pigment or dye; a filler; an antistatic agent; an antibacterial agent; an anti-mold agent; a lubricant; a nucleating agent; a flame retardant; an anti-blocking agent; a dehydrating agent; and a gloss modifier.

Also, the coating part 20 and the lid part 40 may foam, as necessary. Examples of foaming methods generally include: chemical forming method in which gas is generated by thermal decomposition or chemical reaction; and physical foaming method in which a low-boiling point liquid is heated and vaporized. As the state of foaming, a so-called "closed-cell" type having spherical foams formed in the coating part 20, is preferable for the purpose of preventing rainwater from entering inside. However, a so-called "open-cell" type may also be used as necessary.

Furthermore, as shown in FIG. 13, the lid part 40 includes a through hole 46 that penetrates the lid part 40 in the longitudinal direction of the core material 10. When the air in the internal space 31 of the square tube body 30 is heated at the time of extrusion molding, the pressure increases, which may push the lid part 40 to detach it from the square tube body 30. However, with the above-described configuration, the pressure moves to the internal space 31 of the square tube body 30 that is located opposite to the extrusion direction through the through hole 46. Thus, it is possible to decrease the pressure.

FIG. 14 is a cross-sectional view illustrating a main part in another embodiment of the extrusion molded article P of the present invention. In this embodiment, the shape of the square tube body 30 mainly differs from that of the extrusion molded article P shown in FIGS. 1 to 13. Thus, the above difference is mainly described. The common configuration that has been already described is indicated by the same reference numerals, and the description thereof is omitted.

The extrusion molded article P according to this embodiment includes a dovetail groove part 34 that is continuously disposed in the external surface of the square tube body 30 along the longitudinal direction. The coating part 20 covers the external surface of the core material 10 including the inside of the dovetail groove part 34. With this configuration, the coating part 20 can be prevented from moving in the direction orthogonal to the longitudinal direction of the core material 10. Thus, the coating part 20 is not likely to exfoliate from the core material 10.

FIG. 15 is a cross-sectional view illustrating a main part in another embodiment of the extrusion molded article P of the present invention. In this embodiment, the shape of the core material 10 mainly differs from that of the extrusion molded article P shown in FIGS. 1 to 13. Thus, the above difference is mainly described. The common configuration that has been already described is indicated by the same reference numerals, and the description thereof is omitted.

In the extrusion molded article P according to this embodiment, the square tube body 30 partly lacks the lower surface part of the external surface thereof. Accordingly, the internal space 31 of the square tube body 30 communicates with the external space via the lower surface side. With this configuration, in the case where the extrusion molded article P is used outside, even when the upper surface side is heated and its temperature increases, the heat can easily move downward from the square tube body 30. Thus, it is possible to prevent increase in the temperature of the upper surface, which is the side utilized by the user, of the coating part 20.

FIGS. 16 to 20 are explanatory views illustrating another embodiment of the extrusion molded article P of the present invention. FIG. 16 is a perspective view illustrating the embodiment of the extrusion molded article of the present invention. FIG. 17 is an enlarged cross-sectional view taken from line C-C of FIG. 16. FIG. 18 is a perspective view illustrating the embodiment of the core material of the extrusion molded article of FIG. 16. FIG. 19 is a perspective view illustrating the embodiment of the lid part of the extrusion molded article of FIG. 16. FIG. 20 is a perspective view viewed from the back side of FIG. 16. In this embodiment, the respective shapes of the square tube body 30 and the lid part 40 of the core material 10 mainly differ from those of the extrusion molded article P shown in FIGS. 1 to 13. Thus, the above differences will be mainly described. The common configuration that has been already described is indicated by the same reference numerals, and the description thereof is omitted.

In the extrusion molded article P according to this embodiment, the entire perimeter of the external surface of the core material 10 is not coated but a part thereof is coated, as shown in FIGS. 16 and 17. Accordingly, the core material 10 includes an exposed part 14 that is not coated with the coating part 20. More specifically, in this embodiment, the coating part 20 is made by coating the upper part of the core material 10 (i.e. an upper part 12a made up of the upper surface 11 and both side surfaces 12 of the core material 10) that is visually recognized by the user or on which the user walks when the extrusion molded article P is installed. On the other hand, a lower part 12b made up of both side surfaces of the core material 10 includes a recess part 15 that dents inward. The lower part 12b of each side surface 12 and the lower surface 13 constitute the exposed part 14 that is not coated.

As shown in FIGS. 17 and 18, the square tube body 30 of the core material 10 is a shaped material that is made to have a thin-walled hollow shape, and that has a laterally long rectangular cross section. The hollow internal space 31 thereof is divided into multiple spaces by the vertical walls 32. An internal space 31a located at the center lacks partly the lower surface and thus communicates with the external space while an internal space 31b located at each side end part is a closed space that communicates only in the longitudinal direction. With this configuration, in the case where the extrusion molded article P is used outside, even when the upper surface side is heated and its temperature increases, the heat can easily move downward from the internal space 31a that communicates with the external space. Thus, it is possible to prevent increase in the temperature of the coating part 20 on the side of the upper surface 11, which is the side utilized by the user, of the core material 10.

As shown in FIGS. 16 and 19, in the upper surface part of the base part 41 of the lid part 40, the groove part 44 is disposed in a direction intersecting with the longitudinal direction of the core material 10. The coating part 20 covers the upper surface part of the base part 41 and includes the filling part 21 with which the inside of the groove part 44 is filled. Since this configuration is the same as that of the extrusion molded article P shown in FIGS. 1 to 13, the detail description thereof is omitted.

The lower part of each side surface part of the base part 41 of the lid part 40 dents inward so as to fit the external shape of the square tube body 30, which forms the recess part 15 of the core material 10. Thus, in appearance, the square tube body 30 and the lid part 40 are continuously arranged in the longitudinal direction. However, the lid part 40 may have a shape that differs from the external shape of the square tube body 30. For example, the lid part 40 may be formed so as not to have any recessed shape.

The extrusion molded article P shown in FIG. 16 is made by: forming the core material 10 by connecting the square tube bodies 30 shown in FIG. 18 via the lid part 40 shown in FIG. 19; forming the coating part 20 by coating the core material 10 with a resin; cutting the coated core material 10 at positions in the vicinity of the respective lid parts 40 such that both end parts 33 of the square tube body 30 are closed up by the lid parts 40. However, the configuration is not limited to that in this embodiment. Although they are not shown in the Figures, the present invention may include at least the following configurations: the configuration in which only one end part 33 of the square tube body 30 is closed up by the lid part 40; and the configuration in which a plurality of joint portions are disposed so that the multiple square tube bodies 30 are connected to one another via the lid parts 40 to make the core material 10.

In this embodiment, the lid part 40 includes a cut-out part 47 that is made by cutting out the lid part 40 from the end part 42 toward the center part of the base part 41, as shown in FIG. 20. Specifically, the lid part 40 includes the cut-out part 47 that is formed toward a direction in which one part of the lower surface part of the end part 42 is spaced apart from the end part of the square tube body 30 that faces the one part of the lower surface part of the end part 42. The space made by the cut-out part 47 communicates with the external space via the exposed part 14 as well as with the internal space 31b located on each side end part of the square tube body 30.

In this way, although the internal space 31b is essentially a closed space that communicates only in the longitudinal direction, air can flow outside from the cut-out part 47 through the exposed part 14 when the internal space 31b is heated and the internal pressure increases at the time of extrusion molding. Thus, the air is discharged outside from the clearance of the joining part of the square tube body 30 and the lid part 40, which can prevent defective molding such as rupture or expansion of the coating part 20.

The extrusion molded article P of the present invention was described according to the embodiments. However, the present invention should not be limited to the foregoing embodiments and the scope of the present invention is defined by the appended claims.

### Industrial Applicability

With the present invention, an extrusion molded article made by coating a core material with a resin is provided, in which longitudinal direction end parts are easily processed to be tightly closed up. Thus, the present invention is suitably applied to a flooring material, a wall material, a seat and a backrest of a bench, a column member, a handrail material and the like.

### Description of Reference Numerals

- 10: Core material
- 11: Upper surface
- 12: Side surface
- 12a: Upper part
- 12b: Lower part
- 13: Lower surface
- 14: Exposed part
- 20: Coating part
- 21: Filling part
- 22: Swelling part
- 30: Square tube body
- 31, 31a, 31b: Internal space
- 32: Vertical wall
- 33: End part
- 34: Dovetail groove part
- 40: Lid part
- 41: Base part
- 42: End part
- 43: Protruding part
- 44: Groove part
- 45: Communication part
- 46: Through hole
- 47: Cut-out part
- P: Extrusion molded article

## Claims

1. An extrusion molded article (P) comprising:
a core material (10); and
a coating part (20) made of a synthetic resin, the coating part being configured to coat an external surface of the core material, wherein
the core material includes: a tube body (30) and a lid part (40) made of a synthetic resin so as to close up a longitudinal direction end part (33) of the tube body,
the lid part includes a groove part formed in an external surface of the lid part,
the groove part (44) includes a communication part (45) configured such that a longitudinal direction end part of the groove part (44) communicates with an internal space (31, 31a, 31b) of the tube body, and
the coating part includes a filling part (21) configured to fill an inside of the groove part (44),
**characterized in that**
the groove part (44) is formed intersecting with a longitudinal direction of the tube body.

2. The extrusion molded article according to claim 1, wherein the coating part includes a swelling part (22) that expands into the internal space of the tube body through the communication part of the groove part.

3. The extrusion molded article according to claim 1 or 2, wherein the lid part is disposed in a direction intersecting with the longitudinal direction of the tube body.

4. The extrusion molded article according to any one of claims 1 to 3, wherein
the lid part includes a through hole (46) that penetrates the lid part from one end part (42) on a side of the tube body toward another end part.

5. The extrusion molded article according to any one of claims 1 to 4, wherein
the core material includes, on a part of the external surface thereof, an exposed part (14) that is not coated with the coating part, and
the lid part includes a cut-out part (47) that is formed in a direction separating from the longitudinal direction end part of the tube body and that connects the internal space to the exposed part.

## Patentansprüche

1. Extrusionsformartikel (P), aufweisend:
ein Kernmaterial (10); und
ein Beschichtungsteil (20) aus einem synthetischen Harz, wobei das Beschichtungsteil so konfiguriert ist, dass es eine externe Oberfläche des Kernmaterials beschichtet, wobei
das Kernmaterial beinhaltet: einen Röhrenkörper (30) und einen Deckelteil (40) aus einem synthetischen Harz, um einen Längsrichtungsendteil (33) des Röhrenkörpers abzuschließen,
wobei der Deckelteil einen Rillenteil beinhaltet, der in einer externen Oberfläche des Deckelteils gebildet ist,
wobei der Rillenteil (44) einen Kommunikationsteil (45) beinhaltet, der so konfiguriert ist, dass ein Längsrichtungsendteil des Rillenteils (44) mit einem Innenraum (31, 31a, 31b) des Röhrenkörpers kommuniziert, und
der Beschichtungsteil einen Füllteil (21) beinhaltet, der so konfiguriert ist, dass er ein Inneres des Rillenteils (44) füllt,
**dadurch gekennzeichnet, dass**
der Rillenteil (44) so ausgebildet ist, dass er sich mit einer Längsrichtung des Röhrenkörpers kreuzt.

2. Extrusionsformartikel nach Anspruch 1,
wobei der Beschichtungsteil einen Schwellteil (22) beinhaltet, der durch den Kommunikationsteil des Rillenteils in den Innenraum des Röhrenkörpers expandiert.

3. Extrusionsformartikel nach Anspruch 1 oder 2, wobei der Deckelteil in einer Richtung angeordnet ist, die sich mit der Längsrichtung des Röhrenkörpers kreuzt.

4. Extrusionsformartikel nach einem der Ansprüche 1 bis 3, wobei der Deckelteil ein Durchgangsloch (46) beinhaltet, das den Deckelteil von einem Endteil (42) auf einer Seite des Röhrenkörpers in Richtung eines weiteren Endteils penetriert.

5. Extrusionsformartikel nach einem der Ansprüche 1 bis 4, wobei das Kernmaterial auf einem Teil der externen Oberfläche desselben einen freiliegenden Teil (14) beinhaltet, der nicht mit dem Beschichtungsteil beschichtet ist, und
der Deckelteil einen ausgeschnittenen Teil (47) beinhaltet, der in einer Richtung gebildet ist, die von dem Längsrichtungsendteil des Röhrenkörpers separat ist, und der den Innenraum mit dem freiliegenden Teil verbindet.

## Revendications

1. Article moulé par extrusion (P) comprenant :
- un matériau de noyau (10), et une partie de revêtement (20) en résine synthétique,
* la partie de revêtement étant configurée pour revêtir la surface externe du matériau de noyau,
article dans lequel
le matériau de noyau comprend :
- un corps tubulaire (30) et une partie de couvercle (40) en résine synthétique de façon à fermer le corps tubulaire jusqu'à sa partie d'extrémité (33) dans la direction longitudinale,
* la partie de couvercle ayant une partie de rainure formée dans la surface externe de la partie de couvercle,
** la partie de rainure (44) comprend une partie de communication (45) configurée de façon que la partie d'extrémité dans la direction longitudinale de la partie de rainure (44) communique avec l'espace intérieur (31, 31a, 31b) du corps tubulaire, et
* la partie de revêtement comprend une partie de remplissage (21) configurée pour remplir le côté intérieur de la partie de rainure (44),
article **caractérisé en ce que**
la partie de rainure (44) coupe une direction longitudinale de la partie de corps.

2. Article moulé par extrusion selon la revendication 1,
dans lequel
la partie de revêtement comprend une partie gonflée (22) qui s'expanse dans l'espace interne du corps tubulaire à travers la partie de communication de la partie de rainure.

3. Article moulé par extrusion selon la revendication 1 ou 2,
dans lequel
la partie de couvercle est disposée dans une direction coupant la direction longitudinale du corps tubulaire.

4. Article moulé par extrusion selon l'une quelconque des revendications 1 à 3,
dans lequel
la partie de couvercle comprend un orifice traversant (46) qui pénètre la partie de couvercle à partir de la partie d'extrémité (42) sur le côté du corps tubulaire en direction de l'autre partie d'extrémité.

5. Article moulé par extrusion selon l'une quelconque des revendications 1 à 4,
dans lequel
le matériau de noyau comprend sur une partie de sa surface externe, une partie exposée (14) qui n'est pas revêtue avec la partie de revêtement, et
- la partie de couvercle comprend une partie découpée (47) qui est formée dans une direction se séparant de la partie d'extrémité dans la direction longitudinale du corps tubulaire et qui relie l'espace interne à la partie exposée.
